# EUROPEAN PATENT APPLICATION

(11) **EP 1 492 348 A2**
(43) Date of publication of application: **29.12.2004**
(21) Application number: 04015103.7
(22) Date of filing: 28.06.2004
(51) Int. Cl.: H04N 7/173

(54) **Context-sensitive television tags**

(30) Priority: 26.06.2003 US 607073
(71) Applicant: MICROSOFT CORPORATION, Redmond, WA 98052-6399 (US)
(72) Inventor: Krieger, Allyson M., San Francisco California 94131 (US); Lewis, Garth Anton, Sunnyvale California 94087 (US); Yerkes, Rowland W., San Ramon California 94583 (US); Hart, Michael P., San Francisco California 94107 (US)
(74) Representative: Grünecker, Kinkeldey, Stockmair & Schwanhäusser Anwaltssozietät

(57) **Abstract**

A TV tag embedded in web-based content can be selected by a viewer to cause a system to perform an operation associated with the TV tag. Example operations include personalization of a TV planner to include programs that are related to the selected TV tag, scheduling of a particular program to be recorded, generation of an email reminder to be sent when a particular program is scheduled for broadcast, and so on. In an implementation that includes a TV planner, the TV planner may be personalized to include programs associated with a television series, an episode, a movie, a celebrity, a sports team, a topic, and /or a particular channel.

## Description

### TECHNICAL FIELD

This invention relates to television broadcast schedule data and, in particular, to distributed context-sensitive TV tags.

### BACKGROUND

With the increasing amount of data available on the Internet, users may frequently encounter web-based content that relates to television entertainment in some way. Such content may include articles about or descriptions of particular movies or television programs, entertainment news articles or biographies about particular celebrities, and so on. Furthermore, some web content, although not directly related to a particular celebrity or television program, may cover a topic that is also associated with one or more television programs.

With the increasing number of available television broadcast channels, it is increasingly more difficult for television viewers to identify programs of interest and/or to remember to watch those programs. For example, a user may encounter web content that describes a particular television program, decide that it is a program they would like to watch, but then either forget to watch the program or have difficulty finding the program in the television broadcast schedule. As another example, a user may encounter web content on a particular topic, and decide that they would be interested in watching a television program on the same topic, but then have difficulty finding a television program associated with the same topic.

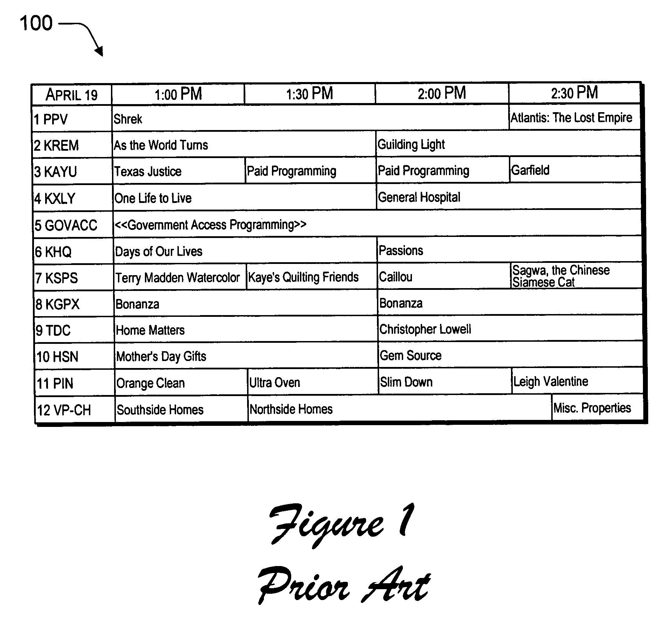

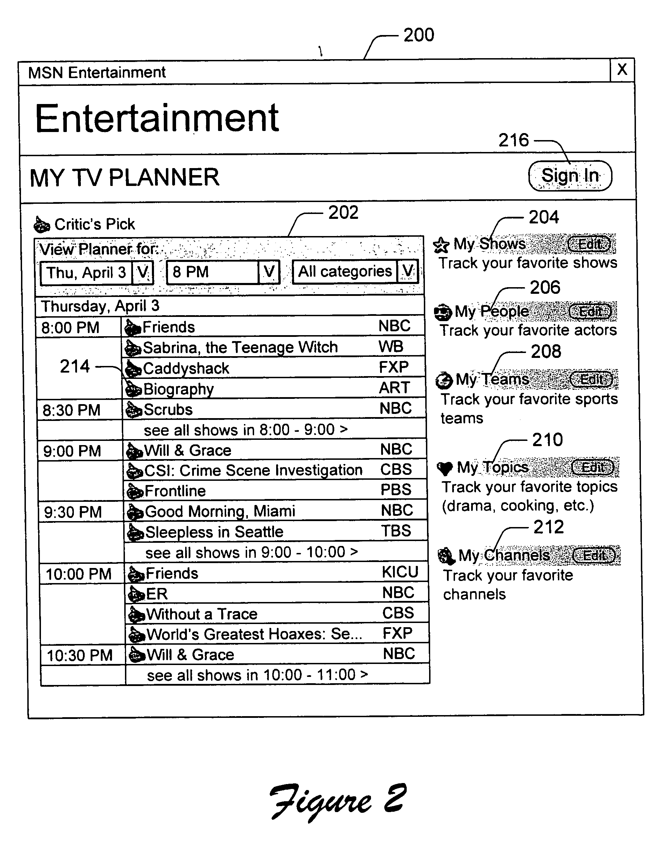

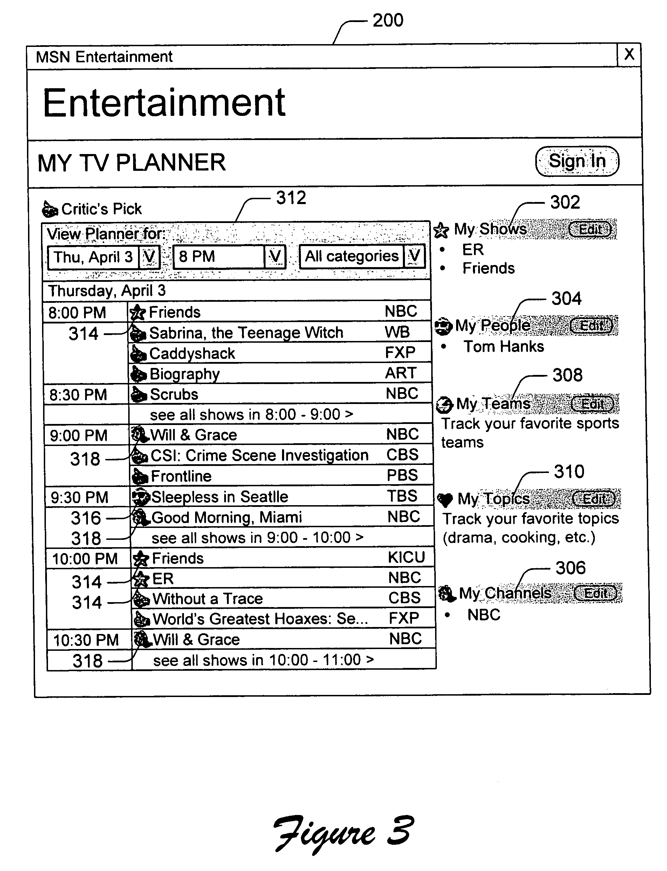

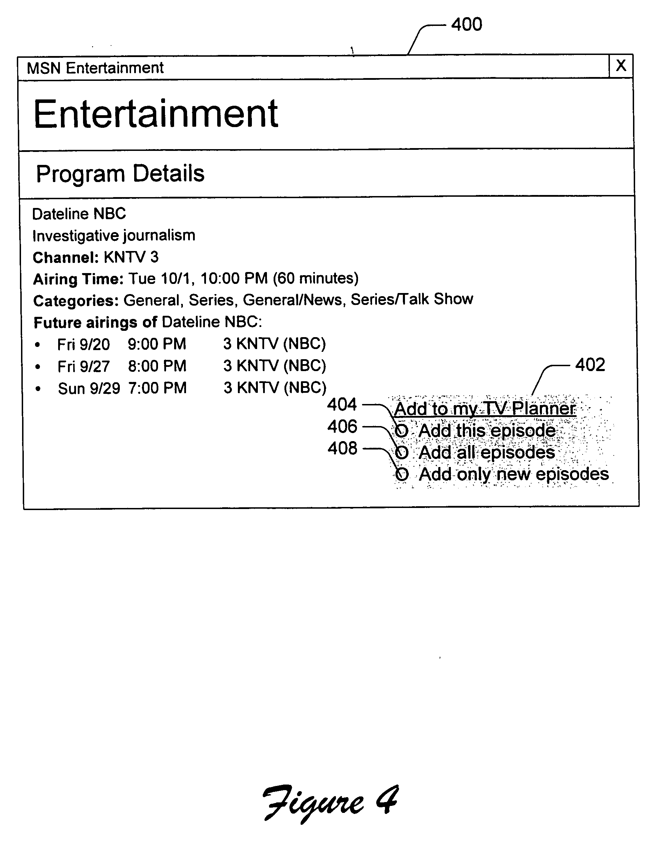

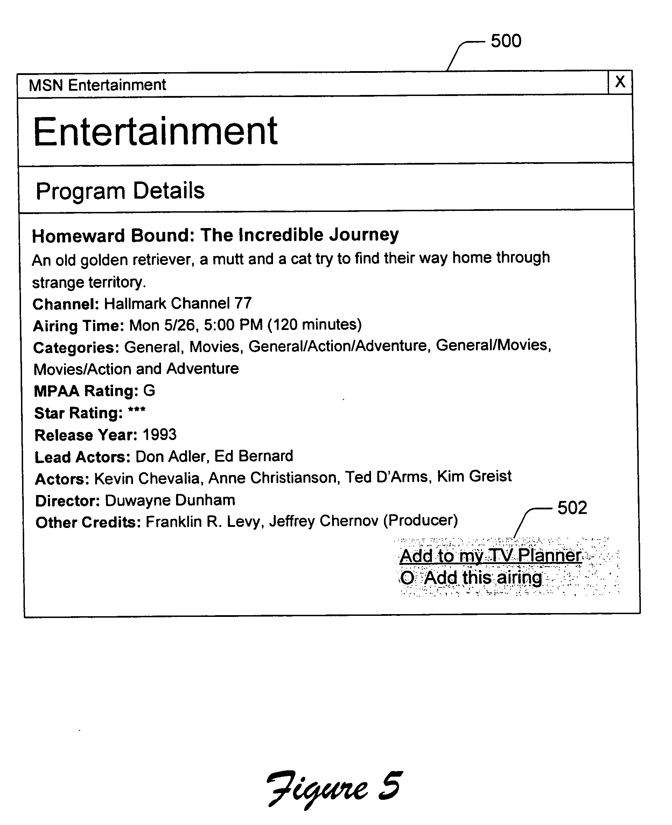

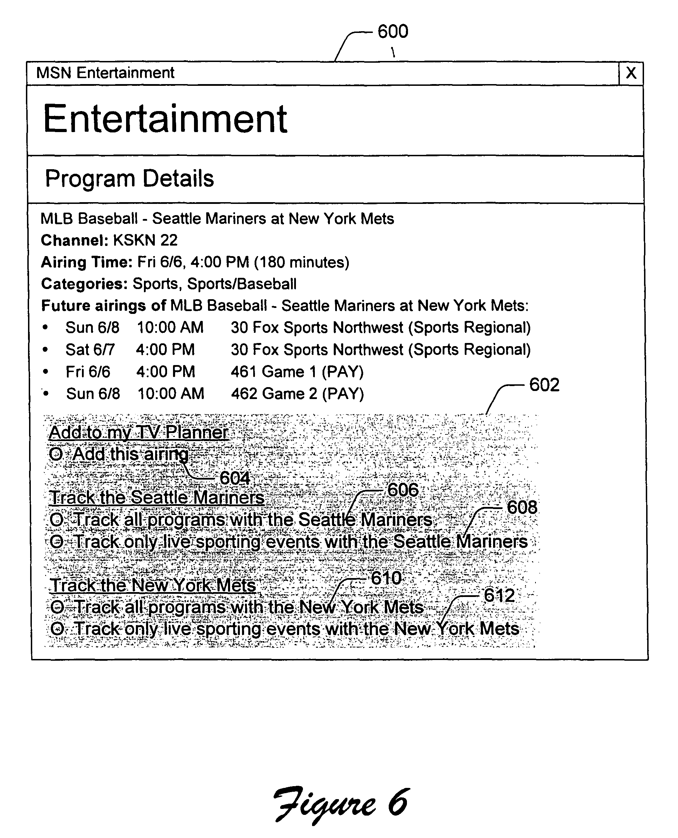

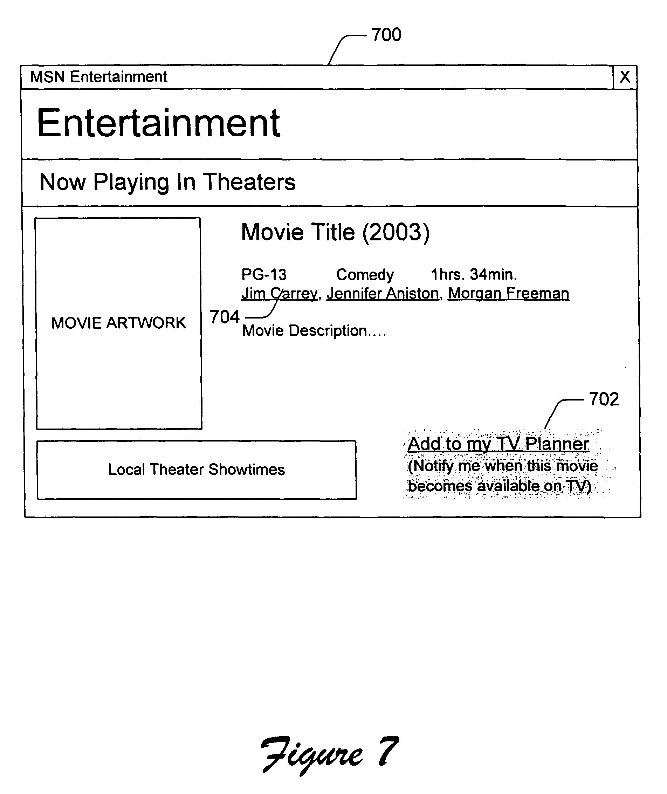

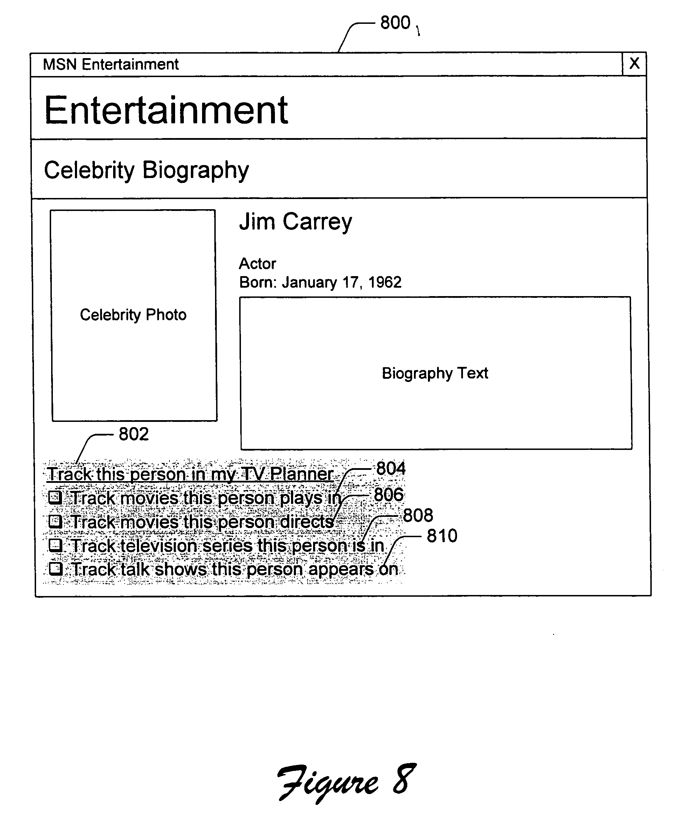

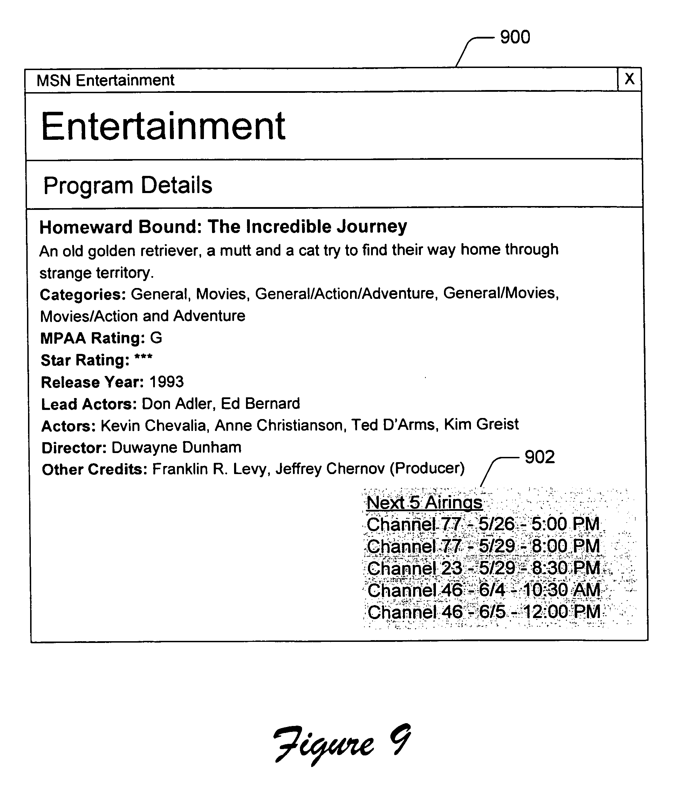

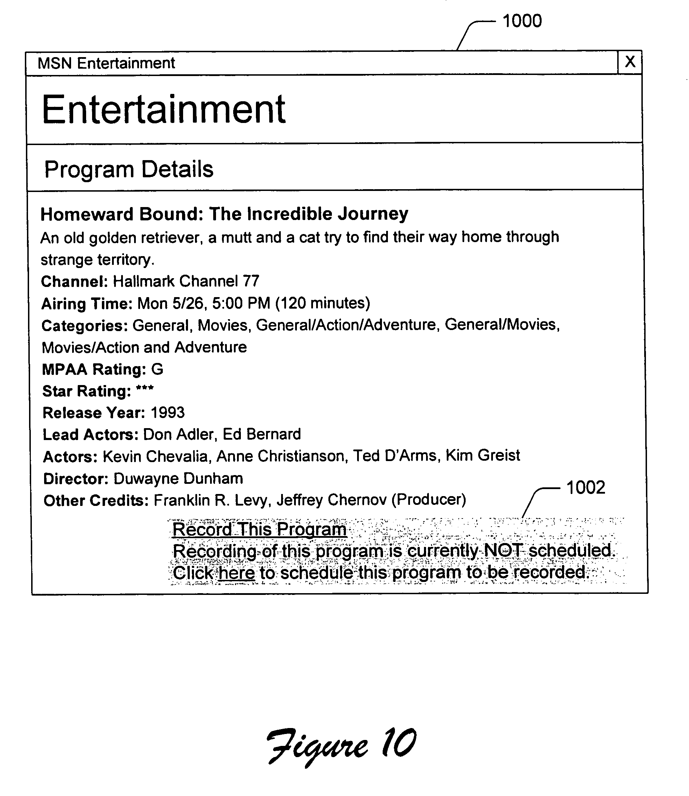

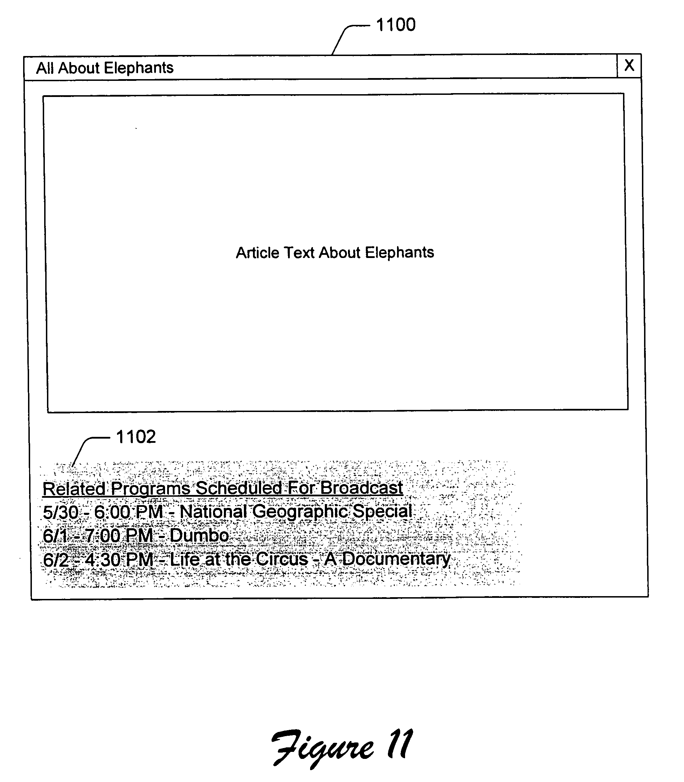

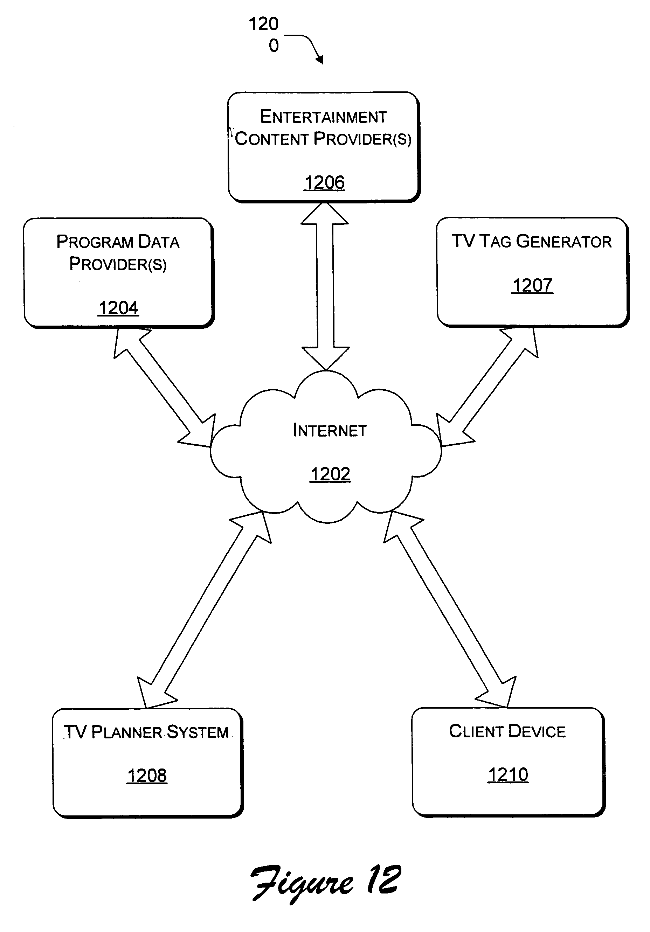

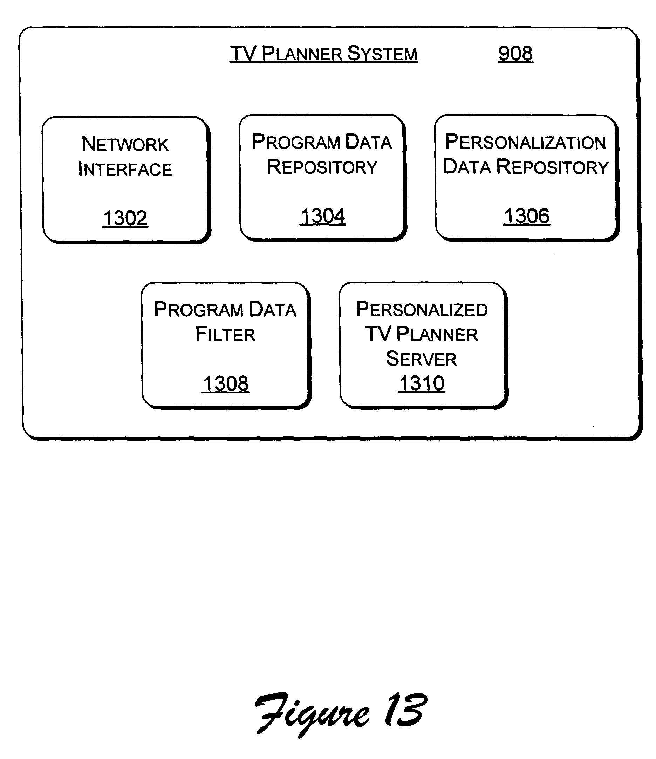

Many systems exist that provide television viewers with the ability to view broadcast program schedules. Such schedules are frequently referred to as electronic program guides (EPGs). Figure 1 - Prior Art illustrates a typical EPG display, which is arranged in a grid format with channels down the left and times across the top. Program data, which is used to generate the EPG, is typically provided over a network to a client device, such as a television set-top box or a personal computer. Such systems may also provide Internet surfing capabilities, but there is typically no association between web content and television broadcast schedule data. Accordingly, a need exists for a television viewer to be able to easily identify television broadcast schedule data associated with related web content.

### SUMMARY

Distributed context-sensitive television tags are described. Such tags represent a particular television-related data element (e.g., a television program, an actor, a sports team, etc.), and can be embedded within contextually relevant content. For example, a web page that describes a particular television program may include a TV tag that lists the next one or more scheduled airings of the program. In addition to providing data, TV tags may have associated actions. For example, a web page that describes a new television program to be aired next fall may include a TV tag that a user can select to cause the scheduled airings of the new program to be displayed in a personalized TV planner. TV tags can also be configured to perform other actions when selected by a user. For example a TV tag can be configured to schedule a recording device to record a particular program or to schedule an alert system to generate an alert to be sent to a particular user when a particular movie is schedule to be broadcast on television.

### BRIEF DESCRIPTION OF THE DRAWINGS

The same numbers are used throughout the drawings to reference like features and components.
Figure 1 - Prior Art illustrates a typical electronic program guide grid display.
Figure 2 illustrates an exemplary default display of a TV planner that can be incrementally personalized via TV tags.
Figure 3 illustrates an exemplary display of a TV planner that has been personalized.
Figure 4 illustrates an exemplary embedded TV tag for adding data associated with a particular program to the personalized TV planner.
Figure 5 illustrates an exemplary embedded TV tag for adding data associated with a particular movie to the personalized TV planner.
Figure 6 illustrates an exemplary embedded TV tag for adding data associated with a sports event or a sports team to the personalized TV planner.
Figure 7 illustrates an exemplary embedded TV tag for adding data associated with a movie not yet scheduled for broadcast to the personalized TV planner.
Figure 8 illustrates an exemplary embedded TV tag for adding data associated with a particular person to the personalized TV planner.
Figure 9 illustrates an exemplary embedded TV tag for listing the next five scheduled airings of a particular program.
Figure 10 illustrates an exemplary embedded TV tag that enables a user to schedule a recording device to record a particular program.
Figure 11 illustrates an exemplary embedded TV tag for listing scheduled broadcasts of programs that are related to the content being displayed.
Figure 12 illustrates an exemplary architecture in which a TV planner that can be incrementally personalized may be implemented.
Figure 13 illustrates select components of an exemplary TV planner system as illustrated in Figure 12.
Figure 14 illustrates select components of an exemplary client device as illustrated in Figure 12.
Figure 15 is a flow diagram illustrating an exemplary method for generating personalized TV planner data.
Figure 16 is a flow diagram illustrating an exemplary method for incrementally personalizing and rendering TV planner data.
Figure 17 is a flow diagram illustrating an exemplary method for embedding TV tags in web-based content.
Figure 18 is a flow diagram illustrating an exemplary method for rendering web-based content with an embedded TV tag.

### DETAILED DESCRIPTION

The following discussion is directed to distributed TV tags that provide contextually relevant television broadcast schedule data. The TV tags may also be configured to have an associated action such as to enable incremental personalization of a TV planner to display programs that a viewer is most interested in viewing. (Alternatively, depending on the implementation, the TV tags may also be configured to enable viewer interaction with any other TV-oriented personalization service such as a TV event calendar, a TV reminder system, a personalized weekly TV newsletter, and so on.) An exemplary TV planner that can be personalized via the distributed TV tags is described herein, and is implemented as a web-based application in which data is transferred across the Internet and displayed using a personal computer. It is recognized, however, that any number of other configurations may also be implemented, for example, to transfer data across cable, broadcast, or satellite networks to other types of client devices, such as television set-top boxes.

Distributed TV tags can be configured to provide contextually relevant television data within other web-based content. Furthermore, the TV tags can be implemented as selectable tags that, when selected, cause a particular action to be performed. In a described exemplary implementation, TV tags are configured to cause personalization data to be stored such that the personalization data can then be used to generate a personalized TV planner that displays listings of scheduled television programs that a viewer is likely to be interested in watching. TV tags that are configured to perform other actions or to simply display contextually relevant data are described in more detail below in the Alternate TV Tag Implementations section.

### Exemplary TV Planner Display

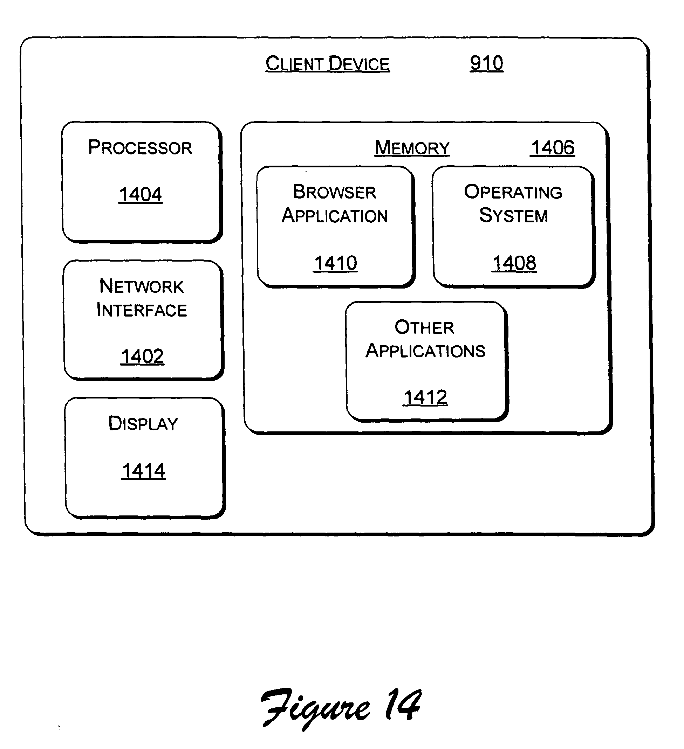

Figure 2 illustrates an exemplary default display of a TV planner 200 that can be personalized. The illustrated exemplary default display may be displayed when a viewer has not yet personalized the TV planner data or when a viewer has not yet logged in with a username and password. In the illustrated implementation, a viewer-requested display of TV planner 200 includes a personalized list of recommended programs 202, a list of the viewer's favorite shows 204, a list of the viewer's favorite people 206, a list of the viewer's favorite sports teams 208, a list of the viewers favorite topics 210, and a list of the viewer's favorite channels 212. Alternate implementations may include more or fewer favorite lists that can be personalized. TV planner 200, illustrated in Figure 2, has not yet been personalized. Accordingly, favorite lists 204 - 212 do not contain any data. Furthermore, in the described implementation, the list of recommended programs 202 is filled by default with the top critic picked programs for each timeslot. As illustrated, programs that are critic picks are indicated in the recommended programs list 202 by an icon, such as the thumbs-up icon 214. In alternate implementations, criteria other than critic picks, may be used to initially populate the recommended programs list 202, for example, the list may be populated with programs scheduled for broadcast at the specified time on a particular set of channels.

Sign in button 216 can be selected by a viewer to open a login screen (not shown) that allows the viewer to enter a username and password to access the user's personalized TV planner data. This can also be used, for example, to switch from one viewer's personalized TV planner to another viewer's personalized TV planner.

Figure 3 illustrates an exemplary display of TV planner 200 that has been personalized by a viewer. In the illustrated example, the viewer has personalized the list of favorite shows 302 to include the programs "ER" and "Friends". The viewer has personalized the list of favorite people 304 to include actor, Tom Hanks. The viewer has furthermore personalized the list of favorite channels 306 to include NBC. The list of favorite sports teams 308 and the list of favorite topics 310 are both blank, indicating that the viewer has not personalized those areas of the TV planner. The personalized list of recommended programs 312 includes programs that are scheduled for broadcast that also meet the criteria represented by the favorite lists 302 - 310. In the illustrated example, distinct icons are used to indicate the reason why individual programs are displayed in the personalized list of recommended programs 312. For example, the star icon 314 is used to indicate that the scheduled broadcasts of "Friends" and "ER" are displayed because the viewer has selected those two programs as favorite shows (as indicated by the favorite shows list 302). Similarly, the celebrity icon 316 is used to indicate that the scheduled broadcast of "Sleepless in Seattle" is displayed because a person associated with the movie was selected by the viewer as a favorite person. In this example, Tom Hanks is listed as a favorite person in the favorite people list 304, and Tom Hanks is the lead actor in the movie "Sleepless in Seattle". The movie reel icon 318 is used to indicate that the scheduled broadcasts of "Will & Grace", and "Good Morning, Miami" are displayed because they are scheduled for broadcast on a channel that was selected by the viewer as a favorite channel. In alternate implementations, textual descriptions may be used in place of the icons to indicate why a particular program is displayed in the personalized list of recommended programs 312. Alternatively, the personalized list of recommended programs 312 may be displayed with no such indicators, or with indicators associated with only some of the available favorite lists.

In the illustrated exemplary implementation, programs that are top critic picks may also be displayed in the personalized list of scheduled programs 312, even if those programs are not indicated by a viewer selected favorite program, channel, person, topic, sports team, or other supported favorite list. For example, the system may be configured to display at a minimum, a particular number of programs. In an event that the minimum number is not reached by programs that satisfy the personalization information, top critic picks may be used to supplement the list. Furthermore, although not illustrated, programs may be displayed in the personalized list of programs 312 that are neither critic picks nor viewer favorites. Such programs may be displayed because the viewer previously requested that the particular broadcast or episode be displayed, and may have a distinct icon or other demarcation associated with them.

An exemplary TV planner application may be configured to enable viewer personalization in multiple ways. For example, the TV planner application may include a wizard-type user interface that walks a user through a series of display screens that allow the user to select one or more programs, channels, actors, etc. to be added to lists of favorites. Context-sensitive TV tags, embedded, for example, in web-based content, provide another way in which viewer personalization of the TV planner 200 can be performed. For example, TV tags may be used to add elements of program data (e.g., programs, people, sports events and teams, topics, and/or channels) to the favorite lists 302-312.

### Exemplary TV Tags

Figure 4 illustrates an exemplary program details web page 400 that includes a TV tag 402. Program details web page 400 may be displayed in response to any number of selections made by a viewer. For example, a viewer may access program details web page 400 by selecting a program from an EPG grid, such as the one illustrated in Figure 1 - Prior Art. In the illustrated example, TV tag 402 may be selected by a viewer to indicate that the viewer wants broadcast schedule data for the television program "Dateline NBC" to be added to the personalized list of scheduled programs 312 in TV planner 200. In the illustrated example, a viewer can select one of three radio buttons 404, 406, and 408, to indicate the viewer's level of interest in the program. For example, to personalize the TV planner 200 to display the broadcast schedule data associated with the described airing of the program (which is Tue 10/1, 10:00 PM in the illustrated example), the viewer selects the "Add this episode" radio button 404. If the viewer is interested in seeing broadcast schedule data associated with any airing of "Dateline NBC", the viewer selects the "Add all episodes" radio button 406. If the viewer is interested in only seeing broadcast schedule data associated with new episodes of the program (i.e., no re-runs), the viewer selects the "Add only new episodes" radio button 408.

In the described implementation, selecting radio button 404 adds data associated with only the indicated broadcast of the program to the personalized list of scheduled programs 312. In an exemplary implementation, a selection of radio buttons 406 or 408 indicates that the viewer is interested in multiple episodes of the program, selecting radio buttons 406 or 408 also adds the indicated program to the viewer's favorite shows list 302.

In alternate implementations, a TV tag displayed on a web page may consist of only a small amount of text and/or an image or icon. In such an implementation, selecting the TV tag may launch the display of another input area through which the user can indicate more specific preferences.

Figure 5 illustrates an exemplary program details web page 500 that includes a TV tag 502. While program details web page 400 illustrated in Figure 4 describes a scheduled broadcast of an episode of a television series (i.e., "Dateline NBC"), program details web page 500 describes a scheduled broadcast of a movie. Program details web page 500 may be displayed in response to any number of selections made by a viewer. For example, a viewer may access program details web page 500 by selecting the movie from an EPG grid, such as the one illustrated in Figure 1 - Prior Art. In the illustrated example, TV tag 502 may be selected by a viewer to indicate that the viewer wants broadcast schedule data for the described broadcast of the movie "Homeward Bound: The Incredible Journey" to be added to the personalized list of scheduled programs 312 in TV planner 200. In the illustrated example, viewer selection of TV tag 502 causes the data associated with the described movie broadcast to be added to the personalized list of scheduled programs 312 in TV planner 200.

Figure 6 illustrates an exemplary program details web page 600 that includes a TV tag 602. Program details web page 600 describes a scheduled broadcast of a sporting event, in this case, a major league baseball game. Program details web page 600 may be displayed in response to any number of selections made by a viewer. For example, a viewer may access program details web page 600 by selecting the scheduled broadcast of the baseball game from a website focused on sporting events, such as a website associated with a sports broadcast network. In the illustrated example, TV tag 602 may be selected by a viewer to indicate that the viewer wants broadcast schedule data for the described broadcast of the sporting event to be added to the personalized list of scheduled programs 312 in TV planner 200. TV tag 602 also includes options that allow the viewer to indicate other levels of interest associated with the sporting event. For example, viewer selection of the "Add this airing" link 604 causes data associated with the described broadcast of the sporting event to be added to the viewer's personalized list of scheduled programs 312 in TV planner 200. TV tag 602 also includes selections that allow a viewer to indicate that one of the teams involved in the sporting event is a favorite team. For example, viewer selection of the "Track all programs with the Seattle Mariners" link 606 may cause the Seattle Mariners to be added to the viewer's personalized list of favorite teams 308 so that all sporting events involving the Seattle Mariners will be displayed in the viewer's personalized list of scheduled programs 312 in TV planner 200. Similarly, viewer selection of the "Track only live sporting events with the Seattle Mariners" link 608 may cause the Seattle Mariners to be added to the viewer's personalized list of favorite teams 308, but with data that indicates that only the live sporting events involving the Seattle Mariners are to be displayed in the viewer's personalized list of scheduled programs 312 in TV planner 200. Links 610 and 612 are similar to links 606 and 608, respectively, but are associated with the other team involved in the sporting event (in this case, the New York Mets).

Figure 7 illustrates an exemplary movie details web page 700 that describes a movie currently showing in theaters. Web page 700 includes a TV tag 702 that can be selected by a viewer. In the described implementation, selecting TV tag 702 associated with a movie that is not yet scheduled for broadcast on television, adds personalization data to the viewer's TV planner that causes broadcast schedule data for the described movie to be displayed in the viewer's personalized list of scheduled programs 312 in TV planner 200 when the movie is released for broadcast on television. Furthermore, a TV planner system may be implemented to also send an alert to the viewer when the movie becomes available on TV. Such an alert may be in the form of an email message, a telephone call, an Internet-based alert, or any other type of viewer alert.

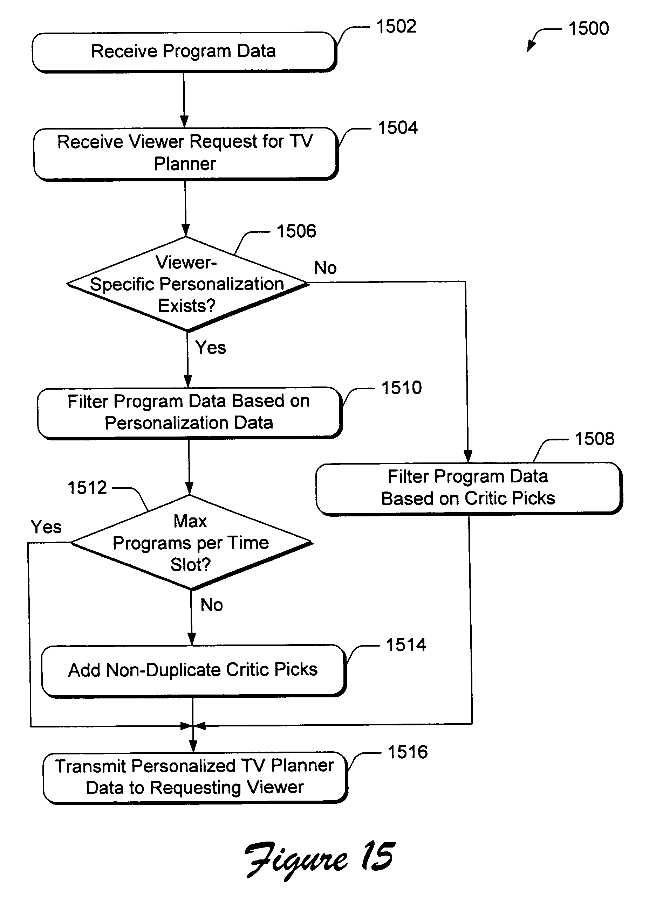

Figure 8 illustrates an exemplary celebrity biography web page 800 that includes a TV tag 802 that can be selected by a viewer. Celebrity biography web page 800 may be displayed in response to any number of selections made by a viewer. For example, a viewer may access celebrity biography web page 800 by selecting a hyperlinked celebrity name on a movie details page, such as the Jim Carrey link 704 on movie details web page 700. In the illustrated example, TV tag 802 may be selected by a viewer to indicate a level of interest that the viewer has in the described celebrity. For example, viewer selection of the "Track movies this person plays in" link 804 causes data associated with any movies in which the celebrity has a role to be added to the viewer's personalized list of scheduled programs 312 in TV planner 200. Viewer selection of the "Track movies this person directs" link 804 causes data associated with any movies for which the celebrity is the director to be added to the viewer's personalized list of scheduled programs 312 in TV planner 200. Viewer selection of the "Track television series this person is in" link 804 causes data associated with any television series in which the celebrity has a role to be added to the viewer's personalized list of scheduled programs 312 in TV planner 200. Viewer selection of the "Track talk shows this person is appears in" link 804 causes data associated with any programs on which the celebrity is a guest to be added to the viewer's personalized list of scheduled programs 312 in TV planner 200. In the illustrated example, viewer selection of each option 804 - 810 of TV tag 802 also results in the described person being added to the viewer's personalized list of favorite people 304.

### Alternate TV Tag Implementations

The TV tags illustrated in Figures 4-8 are used to personalize data presented in a personalized TV planner. Similar context-sensitive TV tags may be used to perform other tasks as well, or to simply display contextually relevant television broadcast data. For example, any combination of any number of actions may be associated with a TV tag that is displayed with data associated with a particular television program, celebrity, movie, topic, or channel. For example, a TV tag may have an associated action that adds personalization data to a TV planner (described with reference to Figures 4-8). Alternatively, a TV tag may have an associated action that schedules an alert system to alert the user, for example, when a program associated with the tag is scheduled to be broadcast. TV tags may also be configured to automatically generate and send an email message containing data associated with a program associated with the TV tag. Such a tag may be configured to include a text edit box as part of the TV tag, in which the user can enter, for example, an email address to which an alert is to be sent. In an alternate implementation, a TV tag may be configured to allow a user to request more information associated with a program, celebrity, team, or topic with which the TV tag is associated, or to find similar programs, celebrities, teams, or topics.

As illustrated in Figure 9, a TV tag may also be configured to display non-selectable contextually relevant data with no associated action. For example, a TV tag may be embedded in a web page that gives a description or critic review of a particular television program such that the TV tag lists the next five (or other configurable number) of scheduled broadcasts of the particular program. As shown in Figure 9, screen display 900 gives a description of a particular movie. Embedded TV tag 902 is configured, in this example, to provide a list of the next five airings of the described movie.

Figure 10 illustrates still another implementation of an embedded TV tag that may be configured to enable a user to automatically schedule the associated program to be recorded, for example, by a digital video recorder (DVR). Screen display 1000 gives details associated with a particular scheduled broadcast of a particular movie. Embedded TV tag 1002 indicates whether or not a recording device associated with the client system is programmed to record the program, and if it is not, provides a selectable link that automatically schedules the recording device to record the described program.

Furthermore, in addition to the scenarios described above, TV tags may also be rendered along with content that may not be directly accessible through an EPG. For example, a network advertisement for a particular program may be rendered with a TV tag. Additionally, news or informational articles may also be rendered with context-sensitive TV tags.

Figure 11 illustrates an example in which a screen display 1100 of an article about elephants includes a TV tag 1102 that lists programs scheduled for broadcast that are in some way associated with displayed article. For example, the article illustrated in Figure 11 is about elephants. The list of scheduled programs includes a National Geographic special about elephants, an airing of the Disney movie, "Dumbo", and an airing of a documentary about life in the circus. Similarly a TV tag may be rendered with the article that enables a user to search for scheduled programs that are about elephants and/or to add elephants as a favorite topic in the user's personalized TV planner.

### Exemplary Environment

Figure 12 illustrates an exemplary environment 1200 in which TV tags and incremental personalization of a TV planner via TV tags may be implemented. Exemplary environment 1200 includes a network (e.g., the Internet 1202) that facilitates communication between one or more program data providers 1204, one or more entertainment content providers 1206, TV tag generator 1207, a TV planner system 1208, and one or more client devices 1210.

Program data provider 1204 stores electronic files of program data, which can be used to generate a TV planner or any other TV-oriented personalization service (e.g., a TV event calendar, a TV reminder system, a personalized weekly TV newsletter, and so on). Program data may include program identifiers, program titles, ratings, characters, descriptions, actor names, director names, release year, genres, station identifiers, channel identifiers, broadcast times, and so on. For discussion purposes, an electronic file maintains program data that includes a program descriptor (e.g., a title), a broadcast date to identify dates on which the program will be broadcast, and a broadcast time to identify the time at which the broadcast will begin.

Program data provider 1204 may make program data available across multiple networks. For example, as illustrated in Figure 12, the program data may be made available over the Internet 1202. Additionally (or alternatively), although not shown, the program data may be made available to other systems, such as a media content distribution system (e.g., a cable headend system) over one or more other networks, such as a broadcast, satellite, or other network using, for example, a file transfer protocol (FTP).

Entertainment content provider 1206 provides entertainment-related content, such as entertainment news articles; profiles describing television programs, movies available on television, and/or movies available in theaters; personal profiles of characters, actors, directors, or other entertainment personalities. In the described implementation, the entertainment-related content is formatted to include, or be associated with, one or more TV tags, and is rendered using client device 1210. (As described above, content that is not entertainment-specific may also be configured to be rendered with TV tags.) In one implementation, TV tags may be imbedded in web-based content as the content is created. Alternatively, as illustrated in Figure 12, a TV tag generator 1207 may be implemented to modify web-based content to include TV tags. In an exemplary implementation, the TV tags that are embedded in the web-based content include various parameters that direct a web server system or a client browser application to retrieve contextually relevant information, based on the TV tag parameters. The contextually relevant information is then rendered with the web-based content.

As a viewer browses Internet content, the viewer may come across content that has associated TV tags. As described above, a TV tag may be configured to display television broadcast scheduled data that is associated with the content, and, in some cases, may be configured as a selectable link with an associated action. When a viewer selects a TV tag, an action associated with the TV tag is performed. For TV tags configured to provide personalization data associated with a personalized TV planner, when a viewer selects a TV tag, indicating that they are interested in the movie, program, character, person, or topic that the tag is associated with, data is transmitted to TV planner system 1208 to be used to personalize TV planner data that may be requested by the viewer at another time. In alternate implementations, selection of an embedded TV tag may result in other actions being performed, such as scheduling of a program to be recorded, creation of a reminder email to be sent when a particular program is scheduled for broadcast, and so on.

In the described implementation, TV planner system 1208 receives program data from program data providers 1204 and personalization data from one or more client devices 1210. When a viewer (using client device 1210) requests TV planner data, TV planner system 1208 formats and/or filters the program data based on the personalization data, and then distributes personalized TV planner data to client device 1210.

### Exemplary TV Planner System

Figure 13 illustrates select components of exemplary TV planner system 1208, illustrated in Figure 12. Exemplary TV planner system 1208 includes network interface 1302, program data repository 1304, personalization data repository 1306, program data filter 1308, and personalized TV planner server 1310.

Network interface 1302 enables TV planner system 1208 to send and receive data across a network, such as the Internet 1202. In alternate implementations, TV planner system 1208 may include multiple network interfaces to enable the transmission and receipt of data across multiple networks.

Program data repository 1304 stores program data that is received, for example, across the Internet from program data providers 1204. Personalization data repository 1306 stores data that describes how multiple viewers' TV planners are to be personalized.

When a viewer requests personalized TV planner data, program data filter 1308 filters the program data stored in program data repository 1304 according to the viewer's personalization data stored in personalization data repository 1306. Personalized TV planner server 1310 transmits the filtered program data through network interface 1302 to a client device 1210.

### Exemplary Client Device

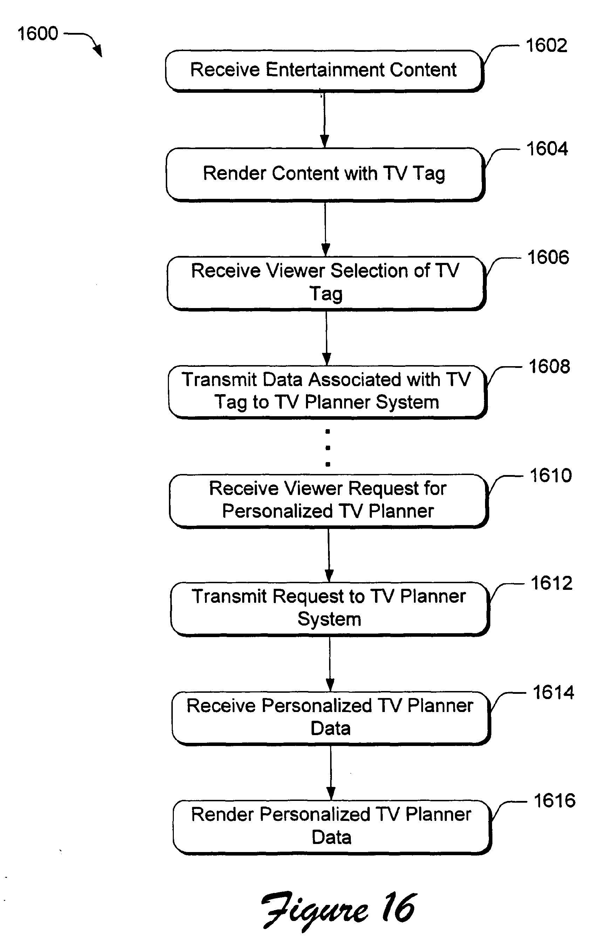

Figure 14 illustrates select components of exemplary client device 1210, illustrated in Figure 12. In the described implementation, client device 1210 is implemented as a personal computer system. However, alternate implementations are also contemplated, including, for example, a television set-top box with Internet browsing capability and portable browser devices, such as web-enabled cellular telephones. Exemplary client device 1210 includes network interface 1402 for enabling communication with other devices via a network (such as Internet 1202), a processor 1404, and a memory 1406. An operating system 1408, a browser application 1410, and other applications 1412 are stored in memory 1406 and executed on processor 1404 to enable viewer interaction with the client device 1210. Client device 1210 also includes a display 1414, which may be implemented, for example, as a computer monitor.

Browser application 1410 receives and processes formatted data, such as hypertext markup language (HTML) or extended markup language (XML) data, causing the data to be rendered using display 1414. Browser application 1410 also enables viewer interaction with the rendered data, such as through selection of rendered hyperlinks.

Although not shown, client device 1210 may also include a recording device, such as a DVR, that may be scheduled to record a particular program based on user-selection of a TV tag.

### Generating Personalized TV Planner Data

Figure 15 illustrates an exemplary process 1500 for generating personalized TV planner data. The process shown in Figure 15 is illustrated as a set of operations shown as discrete blocks. The process may be implemented in any suitable hardware, software, firmware, or combination thereof. The order in which the operations are described is not to be construed as a limitation.

At block 1502, TV planner system 1208 receives program data from program data provider(s) 1204. The received program data is received and stored in the program data repository component 1304 of the TV planner system 1208. The received program data includes descriptors that identify programs (e.g., television programs, movies, video-on-demand, and/or music) that are scheduled for broadcast. The received data also includes broadcast information, such as broadcast channels, broadcast dates, and broadcast times, and may also include additional information related to the scheduled programs.

At block 1504, TV planner system 1208 receives a viewer request for TV planner data. For example, a viewer selects a link to open a personalized TV planner web page using browser application 1410 on client device 1210. Viewer selection of the link causes a request to be sent across Internet 1202 from client device 1210 to TV planner system 1208.

At block 1506, TV planner system 1208 determines whether or not personalization data associated with the requesting viewer exists in personalization data repository 1306. For example, the first time a viewer requests the TV planner, unless the viewer has previously selected one or more TV tags found in entertainment-related web pages, there may be no personalization data stored for the viewer.

At block 1508, when it is determined that there is no personalization data associated with the requesting viewer stored in personalization data repository 1306 (the "No" branch from block 1506), the program data is filtered to identify a default set of programs to be displayed. In an exemplary implementation, program data filter 1308 filters the program data stored in program data repository 1304, resulting in the top five critic pick programs for each time segment to be displayed.

At block 1510, if it is determined that there is personalization data associated with the requesting viewer stored in personalization data repository 1306 (the "Yes" branch from block 1506), the program data is filtered based on the stored personalization data to identify a personalized list of scheduled programs to be displayed. In an exemplary implementation, program data filter 1308 creates a filter based on data stored in personalization data repository 1306. That filter is then applied to program data stored in program data repository 1304, resulting in a list of scheduled programs that the viewer has previously expressed interest in.

At block 1512, TV planner system 1208 determines whether or not a maximum number of programs has been identified for each time slot to be displayed.

At block 1514, when it is determined that the maximum number of programs has not been identified for each time slot to be displayed (the "No" branch from block 1512), scheduled programs that are top critic picks, and that are not already in the filtered list are added to the personalized TV planner data to increase the number of programs that will be displayed for each time slot.

At block 1516, TV planner system 1208 transmits the personalized TV planner data to the client device from which the request was received.

### Method for Enabling Personalization of TV Planner Data

Figure 16 illustrates an exemplary method 1600 for enabling personalization of TV planner data. The process shown in Figure 16 is illustrated as a set of operations shown as discrete blocks. The process may be implemented in any suitable hardware, software, firmware, or combination thereof. The order in which the operations are described is not to be construed as a limitation.

At block 1602, client device 1210 receives entertainment content from entertainment content provider 1206 across Internet 1202.

At block 1604, the received entertainment content is rendered on display 1414 using browser application 1410. The rendered content includes a selectable TV tag, such as those TV tags illustrated in Figures 4-8.

At block 1606, browser application 1410 receives an indication of a viewer selection of the rendered TV tag.

At block 1608, data associated with the selected TV tag is transmitted across Internet 1202 to TV planner system 1208. The personalization data associated with the selected TV tag is stored in personalization data repository 1306.

At a later time, at block 1610, client device 1210 receives a viewer request for personalized TV planner data. For example, a viewer may select a TV planner hyperlink in a web page displayed using browser application 1410.

At block 1612, client device 1210 transmits the request to TV planner system 1208.

At block 1614, client device 1210 receives personalized TV planner data from TV planner system 1208.

At block 1616, the received personalized TV planner data is rendered using browser application 1410.

### Method for Embedding TV Tags

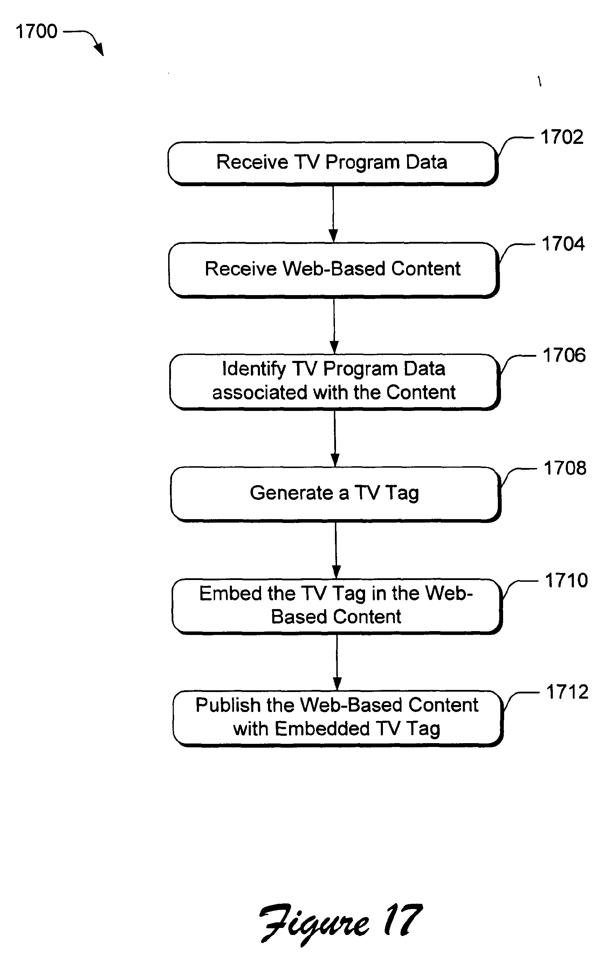

Figure 17 illustrates an exemplary method 1700 for embedding TV tags in web-based content. The process shown in Figure 17 is illustrated as a set of operations shown as discrete blocks. The process may be implemented in any suitable hardware, software, firmware, or combination thereof. The order in which the operations are described is not to be construed as a limitation.

At block 1702, TV tag generator 1207 receives program data from program data providers 1204.

At block 1704, TV tag generator 1207 receives entertainment content from entertainment content provider 1206 across Internet 1202.

At block 1706, the program data associated with the received entertainment content is identified. For example, a keyword search for data associated with received program data is performed against the received web-based content.

Alternatively, rather than receiving program data (as described above with reference to block 1702), at block 1706, TV tag generator 1207 may perform a query against a remote data repository that stores program data.

At block 1708, TV tag generator 1207 generates a TV tag to be imbedded in the web-based content. In an exemplary implementation, the media content is formatted as an ASP.NET Active Server page, and a TV tag is generated as an ASP.NET user control. The ASP.NET user control (the TV tag) may be configured to receive the following initialization parameters: display mode; tag type; and tag ID.

The display mode of the tag defines the format in which the TV tag will be rendered within (or alongside) the media content, and may also be based on an action that is associated with the TV tag. For example, an "add to planner" display mode may indicate that a simple link identifying a particular program will be displayed, and that when a user selects the link, the identified program will be added to a personalized TV planner. Alternatively, a "program details" display mode may indicate that a simple link identifying a particular program will be displayed, and that when a user selects the link, more detailed program information associated with the particular program will be displayed. As another alternative, a "search" display mode may indicate that a link will be displayed that, when selected, launches a keyword search against program data in an effort to identify any programs scheduled for broadcast that are associated with one or more keywords associated with the media content (and thus associated with the TV tag). A display mode may also be configured such that the TV tag that is displayed includes a text box in which a user can enter an email address. Upon selection of the TV tag, an alert system is configured to automatically generate and send an email message when a TV program associated with the media content is scheduled for broadcast. A display mode may also indicate that the tag is not selectable and will only be used to display broadcast schedule data that is contextually relevant.

In an exemplary implementation, the tag type identifies a basis for the TV tag. Example bases include program, series, person, sports team, sports event, genre, topic, etc.

The tag ID is a value that is associated with the tag type of the TV tag. For example, a person tag type may have an associated tag ID with a value of "Tom Cruise", while a sports team tag type may have an associated tag ID with a value of "San Francisco Giants".

At block 1710, TV tag generator 1207 embeds the generated TV tag in the received web-based media content.

At block 1712, TV tag generator 1207 publishes the web-based media content with the embedded TV tags, for example, over Internet 1202.

### Method for Rendering Content with TV Tags

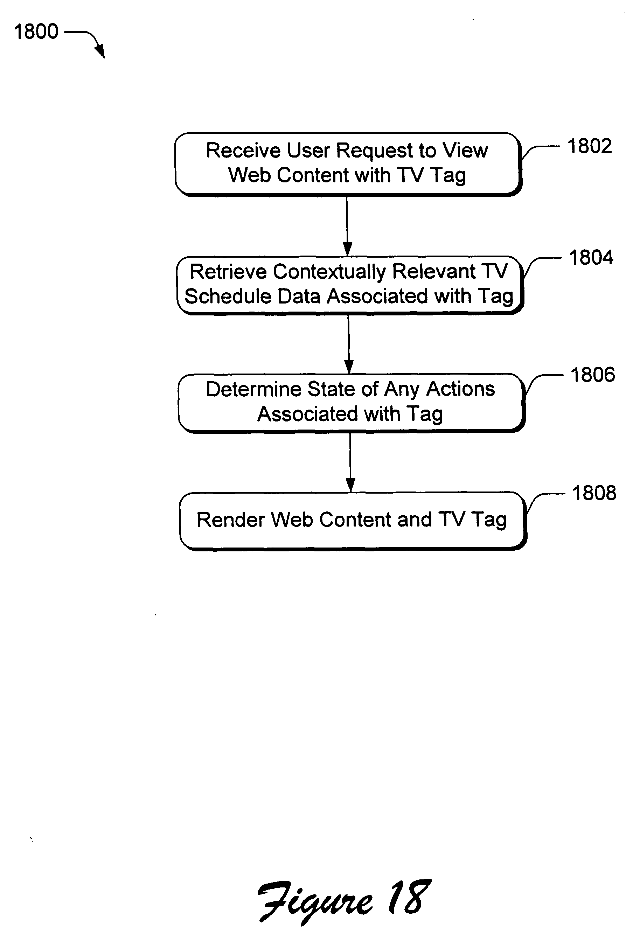

Figure 18 illustrates an exemplary method 1800 for rendering web-based content that includes a TV tag. The process shown in Figure 18 is illustrated as a set of operations shown as discrete blocks. The process may be implemented in any suitable hardware, software, firmware, or combination thereof. The order in which the operations are described is not to be construed as a limitation.

At block 1802, a browser application 1410 receives an indication of a viewer request to view web-based content that includes a TV tag. For example, the user may enter a URL that is associated with the web content, or may select a link from another web page that causes the web content with the TV tag to be rendered.

At block 1804, the browser application 1410 retrieves contextually relevant television data based on parameters of the TV tag. For example, a tag that is associated with a particular television program and is configured to display the next five airings of the program causes the browser application to submit a search against a broadcast schedule data repository to identify the next five airings of the particular program. In an exemplary implementation, the search that is submitted returns broadcast schedule data that is filtered based on the user's timezone. Additionally or alternatively, the broadcast schedule data that is returned is filtered based on the channel lineup that is available to the user from the user's television programming provider.

At block 1806, the browser application 1410 determines the state of any actions associated with the particular TV tag. For example, if the TV tag is configured to enable a viewer to schedule a particular television program to be recorded, the browser application 1410 may query a recording device to determine whether or not the program is already scheduled to be recorded.

At block 1808, the browser application 1410 renders the web content and the associated TV tag data, according to the parameters of the TV tag.

In an alternate implementation, the retrieval of contextually relevant TV data based on the TV tag parameters (described above with reference to block 1804) is performed by a server system before the web-based content is sent to the browser application on the client system. In addition, the determination of the state of actions associated with TV tags (described above with reference to block 1806) may be performed by a server system or a client system.

### Conclusion

As described above, TV tags embedded in web-based media content can be configured to provide television broadcast schedule data that is contextually relevant to the web-based content in which they are embedded. Furthermore, embedded TV tags can have associated actions that, for example, enable a television viewer to incrementally personalize a web-based television planner to display programs that the viewer is most interested in viewing. Although the systems and methods have been described in language specific to structural features and/or methodological steps, it is to be understood that the invention defined in the appended claims is not necessarily limited to the specific features or steps described. Rather, the specific features and steps are disclosed as preferred forms of implementing the claimed invention.

The following is a list of further preferred embodiments of the invention:
Embodiment 1. A method comprising:
   receiving data that describes a television broadcast schedule;
   rendering web-based content that is related to television entertainment; and
   rendering along with the content, a TV tag, the TV tag having an associated data element that can be associated with at least a portion of the data that describes a television broadcast schedule.
Embodiment 2. The method as recited in embodiment 1 wherein the data element comprises data associated with a particular person and the person comprises an actor.
Embodiment 3. The method as recited in embodiment 1 wherein the data element comprises data associated with a particular person and the person comprises a director.
Embodiment 4. The method as recited in embodiment 1 further comprising:
   receiving an indication of a viewer selection of the TV tag; and
   performing an action that is associated with the TV tag.
Embodiment 5. The method as recited in embodiment 4 wherein the action comprises scheduling a recording device to record a particular program that is associated with the TV tag.
Embodiment 6. The method as recited in embodiment 4 wherein the action comprises scheduling an alert system to generate an alert associated with a particular program that is associated with the TV tag.
Embodiment 7. The method as recited in embodiment 6 wherein the alert comprises an email message.
Embodiment 8. One or more computer-readable media comprising computer-executable instructions that, when executed, direct a computer system to perform the method as recited in embodiment 1.
Embodiment 9. A method comprising:
   rendering an article that describes a particular television program;
   rendering along with the article, a selectable TV tag that is associated with the particular television program;
   receiving an indication of a viewer selection of the TV tag; and
   transmitting personalization data based on the selected TV tag to a TV planner system that generates a personalized version of a television broadcast schedule.
Embodiment 10. A method comprising:
   rendering content that describes a particular movie;
   rendering along with the content, a selectable TV tag that is associated with the particular movie;
   receiving an indication of a viewer selection of the TV tag; and
   transmitting personalization data based on the selected TV tag to a TV planner system that generates a personalized version of a television broadcast schedule.
Embodiment 11. One or more computer-readable media comprising computer-executable instructions that, when executed, direct a computer system to perform the method as recited in embodiment 10.
Embodiment 12. A method comprising:
   rendering content associated with a particular person;
   rendering along with the content, a selectable TV tag that is associated with the particular person;
   receiving an indication of a viewer selection of the TV tag; and
   transmitting personalization data based on the selected TV tag to a TV planner system that generates a personalized version of a television broadcast schedule.
Embodiment 13. One or more computer-readable media comprising computer-executable instructions that, when executed, direct a computer system to perform the method as recited in embodiment 12.
Embodiment 14. A method comprising:
   rendering an article associated with a particular sport;
   rendering along with the article, a selectable TV tag that is associated with the particular sport;
   receiving an indication of a viewer selection of the TV tag; and
   transmitting personalization data based on the selected TV tag to a TV planner system that generates a personalized version of a television broadcast schedule.
Embodiment 15. One or more computer-readable media comprising computer-executable instructions that, when executed, direct a computer system to perform the method as recited in embodiment 14.
Embodiment 16. A method comprising:
   receiving web-based content, the content having an associated TV tag that identifies a topic of the web-based content;
   searching television broadcast schedule data for programs associated with the topic; and
   rendering, along with the web-based content, a list of scheduled programs that are associated with the topic.
Embodiment 17. A method comprising:
   receiving web-based media content;
   identifying television entertainment data that may be associated with the web-based media content; and
   associating a TV tag representing the television entertainment data with the web-based media content, such that the TV tag is rendered when the web-based media content is rendered.
Embodiment 18. The method as recited in embodiment 17 wherein the associating comprises adding an ASP.NET control that represents the television entertainment data to an ASP.NET Active Server page that represents the web-based media content.
Embodiment 19. The method as recited in embodiment 18 wherein the ASP.NET control comprises an ASP.NET user control.
Embodiment 20. The method as recited in embodiment 18 wherein the ASP.NET control comprises an ASP.NET server control.
Embodiment 21. The method as recited in embodiment 17 wherein the TV tag has an associated action that is automatically performed when a viewer selects a rendered version of the TV tag.
Embodiment 22. One or more computer-readable media comprising computer-executable instructions that, when executed, direct a computer system to perform the method as recited in embodiment 17.
Embodiment 23. A system, comprising:
   means for receiving web-based content;
   means for receiving television entertainment data; and
   means for embedding in the web-based content, a TV tag that represents a portion of the television entertainment data that is related to the web-based content.
Embodiment 24. The system as recited in embodiment 23, further comprising means for performing an action associated with the TV tag.
Embodiment 25. The system as recited in embodiment 24 wherein the means for performing an action comprises means for maintaining viewer personalization data based on the selection of the TV Tag.
Embodiment 26. The system as recited in embodiment 23, further comprising means for filtering the television entertainment data based on a timezone associated with a viewer.
Embodiment 27. The system as recited in embodiment 23, further comprising means for filtering the television entertainment data based on a channel lineup associated with a viewer.
Embodiment 28. One or more computer-readable media comprising computer-executable instructions that, when executed, direct a computing system to:
   receive web-based content that includes an embedded TV tag;
   perform a search for television broadcast schedule data based on the TV tag; and
   render the web-based content, replacing the embedded TV tag with results of the search.
Embodiment 29. The one or more computer-readable media as recited in embodiment 28 wherein the search returns a list of scheduled television programs that are associated with the web-based content.
Embodiment 30. The one or more computer-readable media as recited in embodiment 28 further comprising computer-executable instructions that, when executed, direct a computing system to:
   receive an indication of a viewer selection of a data element that represents at least a portion of the results of the search; and
   perform an action that is associated with the TV tag in relation to the data element.
Embodiment 31. One or more computer-readable media comprising computer-executable instructions that, when executed, direct a computing system to:
   receive an indication of a viewer selection of a TV tag, the TV tag being rendered with other web-based content, the TV tag having an associated television entertainment data element and an associated action; and
   perform the associated action with reference to the associated television entertainment data element.
Embodiment 32. One or more computer-readable media comprising computer-executable instructions that, when executed, direct a computing system to:
   receive an indication of a viewer selection of a TV tag, the TV tag being rendered with other web-based content, the TV tag representing a particular television program; and
   transmit personalization data to a TV planner system indicating that the viewer is interested in seeing a scheduled broadcast instance of the particular television program in a rendered personalized TV planner.
Embodiment 33. One or more computer-readable media comprising computer-executable instructions that, when executed, direct a computing system to:
   receive an indication of a viewer selection of a TV tag, the TV tag being rendered with other web-based content, the TV tag representing a particular television program; and
   transmit personalization data to an alert system indicating that the viewer is interested in receiving an alert when the particular television program is scheduled for broadcast.
Embodiment 34. One or more computer-readable media comprising computer-executable instructions that, when executed, direct a computing system to:
   receive an indication of a viewer selection of a TV tag, the TV tag being rendered with other web-based content, the TV tag representing a particular television program; and
   schedule a recording device to record a broadcast of the particular television program.

## Claims

1. A method comprising:
rendering web-based content that is related to television entertainment;
rendering along with the content, a selectable TV tag, the TV tag having an associated action and an associated data element;
receiving an indication of a viewer selection of the TV tag; and
performing the associated action in relation to the associated data element based on the selection of the TV tag.

2. The method as recited in claim 1 wherein the web-based content comprises at least one of: program details associated with a particular television program, a description of a particular movie, an article that describes a particular television program, content associated with a particular sport, a celebrity biography, a news article, or an advertisement.

3. The method as recited in claim 1 or 2 wherein the data element comprises at least one of: data associated with a particular television series, television broadcast schedule data that is filtered based on a time zone, television broadcast schedule data that is filtered based on a channel lineup that is available from a television broadcast provider, data associated with a particular episode of a television series, data associated with a particular television program, data associated with a particular movie, data associated with a particular person, data associated with a particular sporting event, data associated with a particular sports team, or data associated with a particular broadcast channel.

4. The method as recited in one of claims 1 to 3 wherein the TV tag is used to display a portion of data that describes a television broadcast schedule, the portion being contextually relevant in relation to the web-based content.

5. The method as recited in one of claims 1 to 4 wherein the performing an action comprises providing personalization data based on the selected TV tag to a TV planner system that generates a personalized version of a television broadcast schedule.

6. The method as recited in claim 5 wherein the TV tag represents a particular television series, and wherein the personalization data indicates that the personalized version of the television broadcast schedule is to include data describing each episode of the particular television series that is scheduled to be broadcast.

7. The method as recited in claim 5 wherein the TV tag represents a particular episode of a particular television program, and wherein the personalization data indicates that the personalized version of the television broadcast schedule is to include data describing the particular episode of the particular television program that is scheduled to be broadcast.

8. The method as recited in claim 5 wherein the TV tag represents a particular television series, and wherein the personalization data indicates that the personalized version of the television broadcast schedule is to include data describing only new episodes of the particular television program that are scheduled to be broadcast.

9. The method as recited in claim 5 wherein the TV tag represents a particular scheduled airing of a particular move, and wherein the personalization data indicates that the personalized version of the television broadcast schedule is to include data describing the particular scheduled airing of the particular movie.

10. The method as recited in claim 5 wherein the TV tag is associated with a particular movie and the providing comprises:
determining whether the particular movie is scheduled for television broadcast; and
in an event that the particular movie is not scheduled for television broadcast, providing personalization data that indicates that the personalized version of the television broadcast schedule is to include data describing scheduled broadcasts of the particular movie at a later date when the movie is scheduled for television broadcast.

11. The method as recited in claim 5 wherein the TV tag is associated with a particular movie and the providing comprises:
determining whether the particular movie is scheduled for television broadcast; and
in an event that the particular movie is not scheduled for television broadcast, providing personalization data that indicates that the TV planner system is to automatically generate and send a reminder to the viewer when the particular movie is later scheduled for television broadcast.

12. The method as recited in claim 5 wherein the TV tag represents a particular actor, and wherein the personalization data indicates that the personalized version of the television broadcast schedule is to include data describing any program scheduled to be broadcast in which the particular actor has a leading role.

13. The method as recited in claim 5 wherein the TV tag represents a particular celebrity, and wherein the personalization data indicates that the personalized version of the television broadcast schedule is to include data describing any program scheduled to be broadcast in which the particular celebrity has a role.

14. The method as recited in claim 5 wherein the TV tag represents a particular celebrity, and wherein the personalization data indicates that the personalized version of the television broadcast schedule is to include data describing any program scheduled to be broadcast in which the particular celebrity has an appearance.

15. The method as recited in claim 14 wherein the program scheduled to be broadcast in which the particular celebrity has an appearance comprises a talk show on which the celebrity is a guest.

16. The method as recited in claim 5 wherein the TV tag is associated with a particular sporting event, and wherein the personalization data indicates that the personalized version of the television broadcast schedule is to include data describing any scheduled airing of the particular sporting event.

17. The method as recited in claim 5 wherein the TV tag is associated with a particular sports team, and wherein the personalization data indicates that the personalized version of the television broadcast schedule is to include data describing any scheduled airing of sporting events involving the particular sports team.

18. The method as recited in claim 5 wherein the TV tag is associated with a particular sports team, and wherein the personalization data indicates that the personalized version of the television broadcast schedule is to include data describing any scheduled airing of live sporting events involving the particular sports team.

19. The method as recited in one of claims 1 to 18 wherein the performing the associated action comprises maintaining personalization data based on the data element, the personalization data to be used to filter subsequent renderings of broadcast schedule data.

20. The method as recited in one of claims 1 to 19 wherein the data element identifies a particular television program, and wherein performing the associated action comprises scheduling a recording device to record the particular television program.

21. The method as recited in one of claims 1 to 20 wherein the performing the associated action comprises scheduling an alert system to generate an alert associated with the data element.

22. The method as recited in claim 21 wherein the data element identifies a particular television program, and the alert is generated when the particular television program is scheduled to be broadcast.

23. The method as recited in claim 21 or 22 wherein the alert comprises at least one of an email message, an Internet-based alert message, or an automated telephone call.

24. A system comprising:
a program data repository to maintain television broadcast schedule data;
a web server system to store and serve web-based content; and
a TV tag generator to embed TV tags representing portions of the television broadcast schedule data in the web-based content such that when the web-based content is rendered, television broadcast schedule data associated with the web-based content is also rendered.

25. The system as recited in claim 24 wherein the TV tag generator is implemented as part of the web server system.

26. The system as recited in claim 24 or 25 further comprising:
a network interface to receive viewer personalization data based on viewer-selection of a TV tag embedded in web-based media content;
a personalization data repository to maintain the viewer personalization data; and
a program data filter to filter the television broadcast schedule data based on the personalization data.

27. The system as recited in claim 26 further comprising a schedule transmitter to transmit a filtered television broadcast schedule to a viewer.
